# EUROPEAN PATENT APPLICATION

(11) **EP 1 921 881 A1**
(43) Date of publication of application: **14.05.2008**
(21) Application number: 06796679.6
(22) Date of filing: 23.08.2006
(51) Int. Cl.: H04Q 7/38

(54) **MOBILE STATION, WIRELESS ACCESS NETWORK APPARATUS, AND MOBILE COMMUNICATION SYSTEM**

(30) Priority: 30.08.2005 JP 2005250110
(71) Applicant: NTT DoCoMo, Inc., Chiyoda-ku Tokyo 100-6150 (JP)
(72) Inventor: ISHII, Minami, Tokyo, 1006150 (JP); ABETA, Sadayuki, Tokyo, 1006150 (JP); NAKAMURA, Takehiro, Tokyo, 1006150 (JP); SUZUKI, Takashi, Tokyo, 1070052 (JP)
(74) Representative: HOFFMANN EITLE
(86) International application number: PCT/JP2006/316515
(87) International publication number: WO 2007/026583

(57) **Abstract**

A mobile station, a radio access network apparatus and a mobile communication system that can decrease signal amount of each message to decrease connection delay are provided. The mobile station is provided with storing means configured to store a conversion table between a combination of a plurality of parameters defined beforehand and an identifier representing the combination of the plurality of parameters; uplink transmission signal generation means configured to generate an uplink transmission signal including the identifier when performing uplink transmission; transmission means configured to transmit the uplink transmission signal to the radio access network apparatus; reception means configured to receive a downlink transmission signal transmitted by the radio access network apparatus; and parameter setting means configured to detect the identifier from the received downlink transmission signal, read and set a parameter based on the identifier.

## Description

### TECHNICAL FIELD

The present invention relates to a mobile station, a radio access network apparatus, and a connection setup method for a mobile communication system.

### BACKGROUND ART

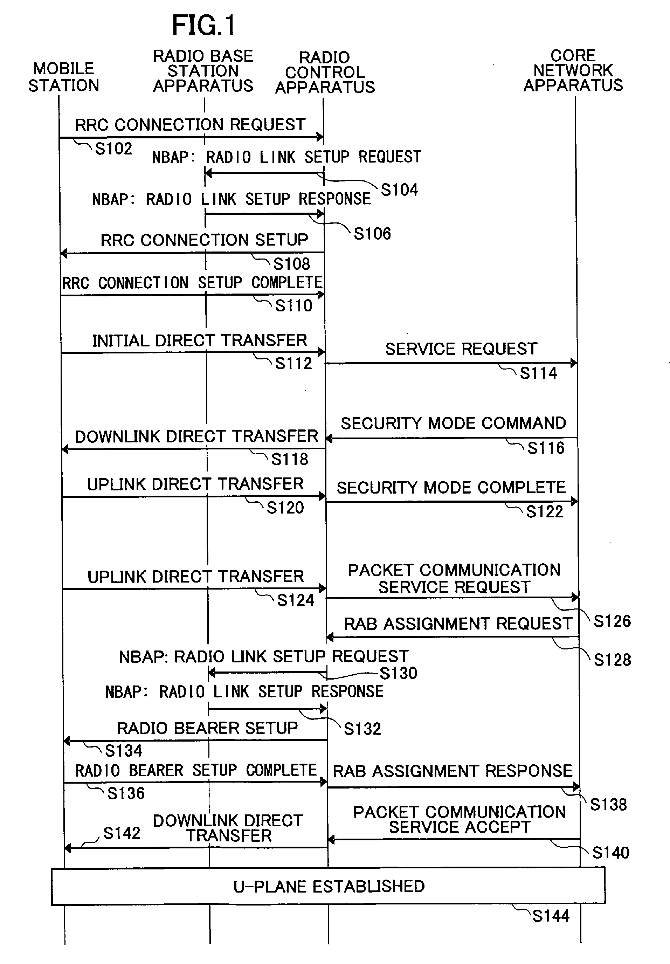

A conventional mobile communication system is configured to be able to provide services of various data rates from low data rate such as a voice service to a streaming service, a download service and the like according to the capability of a mobile apparatus. Therefore, when performing connection setup, it is necessary to exchange messages between a mobile station and a network as shown in Fig.1 so as to exchange large amount of information in each message with respect to capability of the mobile station, security configuration, service configuration, radio channel configuration and the like.

For example, in the case of RRC (Radio Resource Control) connection setup shown in Fig.1, since information equal to or greater than 100 octets is transmitted using a low data rate channel, the transmission requires time.

In the following, a sequence of the RRC Connection Setup shown in Fig.1 is described.

First, the mobile station transmits a RRC Connection Request signal to a radio control apparatus (step S102).

The radio control apparatus responds to the signal to transmit a NBAP: Radio Link Setup Request signal to a radio base station apparatus (step S104). In response to that, the radio base station apparatus transmits a NBAP: Radio Link Setup Response signal to the radio control apparatus (step S106).

Next, the radio control apparatus transmits a RRC Connection Setup signal to the mobile station (step S108). In response to that, the mobile station transmits a signal for reporting RRC Connection Setup Complete to the radio control apparatus (step S110).

Next, the mobile station transmits an Initial Direct Transfer signal to the radio control station (step S112). In response to this, the radio control apparatus transmits a Service Request signal to a core network apparatus (step S114). The core network apparatus receives the signal, and transmits a Security Mode Command signal to the radio control apparatus (step S116). In response to that, the radio control apparatus transmits a Downlink Direct Transfer signal to the mobile station (step S118). The mobile station receives the signal, and transmits an Uplink Direct Transfer signal to the radio control apparatus (step S120). The radio control apparatus receives the signal, and transmits a signal for reporting Security Mode Complete to the core network (step S122).

Next, the mobile station transmits an Uplink Direct Transfer signal to the radio control apparatus (step S124). The radio control apparatus receives the signal, and transmits a packet communication service request (Active PDP Context Request) signal to the core network apparatus (step S126). In response to that, the core network apparatus transmits a RAB (radio access bearer) Assignment Request signal to the radio control apparatus (step S128). The radio control apparatus receives the signal and transmits a NBAP: Radio Link Setup Request signal to the radio base station apparatus (step S130). In response to that, the radio base station apparatus transmits a Radio Link Setup Response signal to the radio control apparatus (step S132).

The radio control apparatus receives the signal, and transmits a Radio Bearer Setup request signal to the mobile station (step S134). In response to that, the mobile station transmits a signal for reporting Radio Bearer Setup Complete to the radio control apparatus (step S136).

The radio control apparatus receives the signal, and transmits a RAB Assignment Response to the core network apparatus (step S138).

In response to that, the core network apparatus transmits a packet communication service accept (Active PDP Context Accept) signal to the radio control apparatus (step S140). In response to that, the radio control apparatus transmits a Downlink Direct Transfer signal to the mobile station (step S142). As a result of the above-mentioned series of the procedure, U-plane is established between the mobile station and the core network apparatus (step S144).

### DISCLOSURE OF THE INVENTION

### PROBLEM TO BE SOLVED BY THE INVENTION

However, the following problem may occur in the above-mentioned background technique.

That is, as described before with reference to Fig.1, when information exchange is performed using a low data rate channel between the mobile station and the network, transmission of information takes time, so that there is a problem in that the time appears to be delay time required until connection completion for users.

The present invention is contrived in view of the above-mentioned problem, and an object of the present invention is to provide a mobile station, a radio access network apparatus and a mobile communication system that can decrease as much as possible the delay time required until the connection completion (to be referred to as "delay time when performing connection setup" hereinafter) by decreasing a signal amount of each of the above-mentioned signals shown in Fig.1.

### MEANS FOR SOLVING THE PROBLEM

To solve the above-mentioned problem, the mobile station of the present invention is a mobile station for performing bidirectional communication between the mobile station and a radio access network apparatus, including, as one of characteristics:
storing means configured to store a conversion table between a combination of a plurality of parameters defined beforehand and an identifier representing the combination of the plurality of parameters;
uplink transmission signal generation means configured to generate an uplink transmission signal including the identifier when performing uplink transmission;
transmission means configured to transmit the uplink transmission signal to the radio access network apparatus;
reception means configured to receive a downlink transmission signal transmitted by the radio access network apparatus; and
parameter setting means configured to detect the identifier from the received downlink transmission signal, read and set a parameter based on the identifier.

By configuring like this, the signal length of the signals necessary for each procedure in connection setup can be largely decreased so that delay time when performing connection setup can be decreased.

The radio access network apparatus of the present invention is a radio access network apparatus for performing bidirectional communication between a mobile station and the radio access network apparatus, including, as one of characteristics:
storing means configured to store a conversion table between a combination of a plurality of parameters defined beforehand and an identifier representing the combination of the plurality of parameters;
reception means configured to receive an uplink transmission signal transmitted by the mobile station;
parameter setting means configured to detect the identifier from the received uplink transmission signal, read and set a parameter based on the identifier; and
transmission means configured to transmit a downlink transmission signal based on the parameter that is set.

By configuring like this, the signal length of the signals necessary for each procedure in connection setup can be largely decreased so that delay time when performing connection setup can be decreased.

The mobile communication system of the present invention is a mobile communication system for performing bidirectional communication between a mobile station and a radio access network apparatus,
the mobile station including:
storing means configured to store a conversion table between a combination of a plurality of parameters defined beforehand and an identifier representing the combination of the plurality of parameters;
uplink transmission signal generation means configured to generate an uplink transmission signal including the identifier when performing uplink transmission;
transmission means configured to transmit the uplink transmission signal to the radio access network apparatus;
reception means configured to receive a downlink transmission signal transmitted by the radio access network apparatus; and
parameter setting means configured to detect the identifier from the received downlink transmission signal, read and set a parameter based on the identifier,
the radio access network apparatus including:
storing means configured to store a conversion table between a combination of a plurality of parameters defined beforehand and an identifier representing the combination of the plurality of parameters;
reception means configured to receive an uplink transmission signal transmitted by the mobile station;
parameter setting means configured to detect the identifier from the received uplink transmission signal, read and set a parameter based on the identifier; and
transmission means configured to transmit a downlink transmission signal based on the parameter that is set.

By configuring like this, the signal length of the connection setup signal transmitted from the mobile station and the connection setup signal transmitted from the radio access network apparatus can be largely decreased in each procedure necessary for so that delay time when performing connection setup can be decreased.

### EFFECT OF THE INVENTION

According to an embodiment of the present invention, a mobile station, a radio access network apparatus and a mobile communication system that can decrease the signal length of the signals necessary for connection setup so as to decrease the delay time when performing connection setup can be realized.

### BRIEF DESCRIPTION OF THE DRAWINGS

Fig.1 is a sequence diagram showing a connection setup sequence;
Fig.2 is a schematic diagram showing a mobile communication system according to an embodiment of the present invention;
Fig.3 is a block diagram showing a mobile station according to an embodiment of the present invention;
Fig.4 is a schematic diagram showing an identifier conversion table according to an embodiment of the present invention;
Fig.5 is a block diagram showing a radio access network apparatus according to an embodiment of the present invention;
Fig.6 is a block diagram showing a configuration of a radio access network apparatus according to an embodiment of the present invention;

### Description of reference signs

- 100: mobile station
- 200: radio access network apparatus

### PREFERRED EMBODIMENTS FOR CARRYING OUT THE INVENTION

Next, embodiments of the present invention are described with reference to figures. By the way, in all figures for describing the embodiments, same symbols are used for parts having same function, and repeating descriptions are not provided.

Next, the preferred embodiments for carrying out the present invention are described with reference to figures based on the following embodiments.

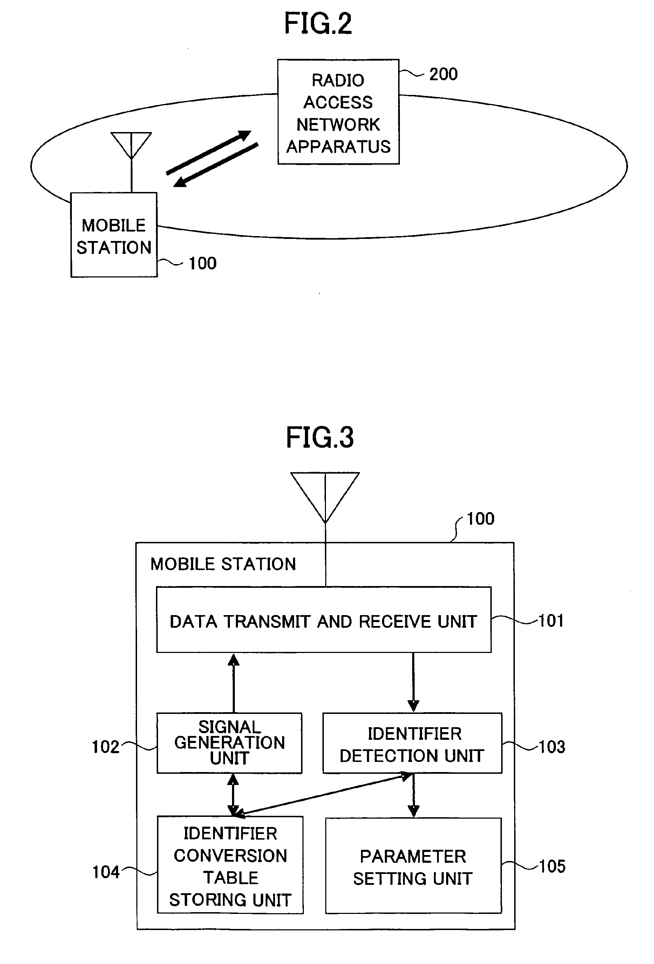

The mobile communication system according to an embodiment of the present invention is described with reference to Fig.2.

The mobile communication system of the present embodiment includes a mobile station 100 and a radio access network apparatus 200. The mobile station 100 and the radio access network apparatus 200 performs bidirectional communication with each other.

Next, a configuration of the mobile station of the present embodiment is described with reference to Fig.3.

The mobile station 100 includes a data transmit and receive 101 as transmission means and receiving means having an antenna, a signal generation unit 102 as uplink transmission signal generation means connected to the data transmit and receive unit 101, an identifier detection unit 103 as parameter setting means and conversion table creation means, an identifier conversion table storing unit 104 as storing means connected to the signal generation unit 102 and the identifier detection unit 103, and a parameter setting unit 105 connected to the identifier detection unit 103.

The data transmit and receive unit 101 performs transmission and reception of data. For example, the data transmit and receive unit 101 performs transmission of an uplink transmission signal, reception of a downlink transmission signal, and reception of system information. The uplink transmission signal and the downlink transmission signal include every signal for transmitting and receiving a parameter. For example, in the sequence of connection setup described with reference to Fig.1, for example, each of the RRC connection request signal in step S102 and the uplink direct transfer signal in step S120 corresponds to the uplink transmission signal. Each of the RRC connection setup signal in step S108 and the direct transfer signal in step S118 corresponds to the downlink transmission signal.

The signal generation unit 102 generates a signal including an identifier. For example, when transmitting an uplink transmission signal, that is, when sending a connection request, for example, the signal generation unit 102 refers to stored information in the after-mentioned identifier conversion table storing unit 104 to replace parameters to be transmitted with a corresponding identifier for generating a signal. By generating a transmission signal by replacing a plurality of parameters to be transmitted with an identifier in this way, the signal length of the transmission signal can be effectively decreased.

The transmission signal in which the parameter to be transmitted is replaced with the identifier is transmitted to the access network apparatus 200, and an after-mentioned identifier detection unit 203 of the access network apparatus 200 detects the identifier. Then, an after-mentioned identifier conversion table storing unit 204 of the access network apparatus 200 is referred to using the detected identifier so that the corresponding parameters and set values of the parameters are read.

As mentioned later, contents of the identifier conversion table stored in the identifier conversion table storing unit 104 in the mobile station 100 are made to be the same as contents of the identifier conversion table stored in the identifier conversion table apparatus 204 of the radio access network apparatus 200. As a result, as mentioned above, each parameter that is the same as each parameter selected by the signal generation unit 102 of the mobile station 100 is read from the identifier conversion table storing unit 204 of the access network apparatus 200, and the value is set by the parameter setting unit 205 of the access network apparatus 200.

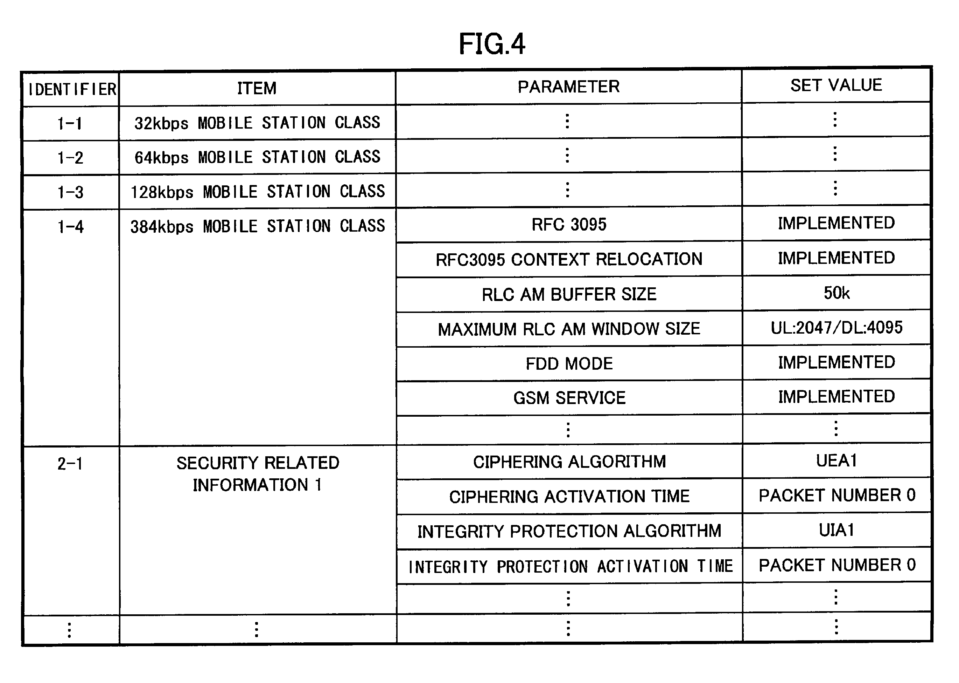

The identifier conversion table storing unit 104 stores correspondence relationship between a predefined combination of parameters and an identifier indicating the combination of the parameters. For example, the identifier conversion table storing unit 104 stores at least one identifier for at least one of items of service configuration, security configuration, mobile station capability setting, radio channel configuration, measurement item setting and discontinuous reception setting. For example, as shown in Fig.4, the identifier conversion table storing unit 104 assigns each of identifies for each setting item, and stores parameters belonging to each identifier and a set value of each parameter as a table.

For example, as shown in Fig.4, in the identifier conversion table storing unit 104, mobile stations are classified for each data rate to be stored as the items.

For example, 32 kbps mobile station class (UE capability 32kbps class) is stored as an identifier 1-1, 64 kbps mobile station class (UE capability 64kbps class) is stored as an identifier 1-2, 128 kbps mobile station class (UE capability 128kbps class) is stored as an identifier 1-3, and 384 kbps mobile station class (UE capability 384kbps class) is stored as an identifier 1-4.

In addition, parameters and the set values are stored in the identifier conversion table storing unit 104 for each class of the mobile stations.

For example, the identifier conversion table storing unit 104 stores Support for RFC 3095, Support for RFC 3095 context relocation, Total RLC AM buffer size, Maximum RLC AM window size, FDD mode (Support for UTRA FDD), GSM service (Support for GSM) and the like as radio parameters of the UE 384 kbps class, and the identifier conversion table storing unit 104 stores implemented (YES), implemented (YES), 50k, UL:2047/DL:4095, implemented (YES) and implemented (YES) for their respective set values.

In addition, as an item, security related information (Security on) is stored in the identifier conversion table storing unit 104. For example security related information 1 is stored as an identifier 2-1.

In addition, parameters and the set values are stored for each piece of the security related information in the identifier conversion table storing unit 104. For example, the identifier conversion table storing unit 104 stores Ciphering algorithm, Ciphering activation time, spoofing protection algorithm (Integrity protection algorithm) and spoofing protection algorithm execution start time (Integrity protection activation time) as parameters of the security related information 1 corresponding to the identifier 2-1, and the identifier conversion table storing unit 104 stores, as their respective set values, UEA1, packet number 0 (Sequence number 0), UIA1 and packet number 0 (Sequence number 0).

The identifier detection unit 103 detects an identifier from the signal received by the data transmit and receive unit 101, and reads at least one parameter indicated by the identifier and a set value of the parameter from the identifier conversion table storing unit 104.

The parameter indicated by an identifier may be one parameter or a plurality of parameters. However, the signal length to be transmitted can be decreased more effectively in the case of indicating a plurality of parameters using one identifier.

In addition, when the identifier detection unit 103 detects a combination of a new identifier and a parameter, the identifier detection unit 103 adds and stores a combination of the new identifier and a parameter specified by the radio access network apparatus as one corresponding to the new identifier in the identifier conversion table storing unit 104.

On the other hand, when the identifier detection unit 103 detects a combination of an existing identifier and a new parameter, the identifier detection unit 103 updates the correspondence relationship stored in the identifier conversion table storing unit 104.

That is, the identifier detection unit 103 generates an identifier conversion table based on a correspondence relationship between a combination of a plurality of received parameters and a received identifier indicating the combination of the plurality of parameters. Then, the identifier detection unit 103 replace the existing identifier conversion table with the new identifier conversion table.

In these cases, the data transmit and receive unit 101 receives, from the radio access network apparatus 200, the correspondence relationship between the combination of the plurality of received parameters and the identifier indicating the combination of the plurality of parameters as system information, for example.

As a result, contents of the identifier conversion table stored in the identifier conversion table storing unit 104 become the same as contents of the identifier conversion table stored in the after-mentioned identifier conversion table storing unit 204 of the radio access network apparatus 200.

The parameter setting unit 105 performs setting of each parameter value read by the identifier detection unit 103 in this way.

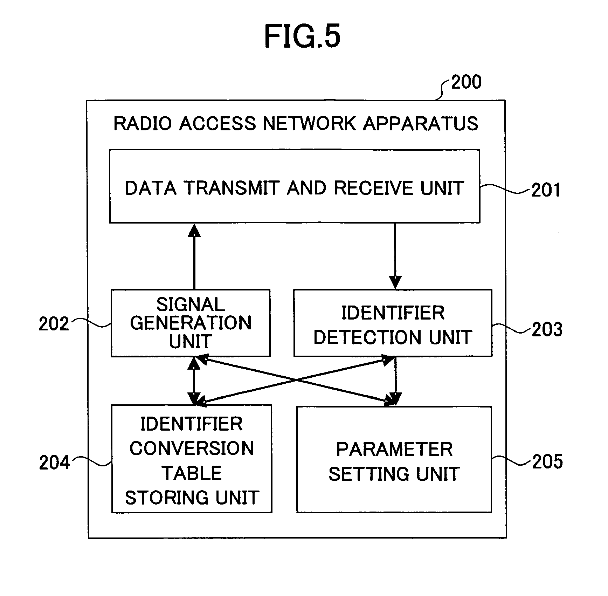

Next, the radio access network apparatus 200 of the present embodiment is described with reference to Fig.5.

The radio access network apparatus 200 includes a data transmit and receive unit as transmission means and reception means, a signal generation unit 202 as downlink transmission signal generation means and an identifier detection unit 203 as parameter setting means that are connected to the data transmit and receive unit 201, an identifier conversion table storing unit 204 as storing means connected to the signal generation unit 202 and the identifier detection unit 203, and a parameter setting unit 205 connected to the signal generation unit 202 and the identifier detection unit 203.

The data transmit and receive unit 201 performs data transmission and reception. For example, the data transmit and receive unit 201 performs transmission of a downlink transmission signal, reception of an uplink transmission signal, and transmission of system information.

The uplink transmission signal and the downlink transmission signal mean every signal transmitting a parameter. For example, in the connection setup sequence described with reference to Fig.1, the uplink transmission signal corresponds to the RRC connection request signal in step S102, the uplink direct transfer signal in step S120 and the like, for example. The downlink transmission signal corresponds to the RRC connection setup signal in step S108, the direct transfer signal in step S118 and the like.

The signal generation unit 202 generates a signal including the identifier.

For example, in the case of transmitting a downlink transmission signal, that is, when sending a connection response for example, the signal generation unit 202 selects each parameter to be transmitted in consideration of the information of the received connection request signal. Then, the signal generation unit 202 refers to stored information of the identifier conversion table storing unit 204 to replace the selected parameters with a corresponding identifier so as to generate the signal. By generating the transmission signal by replacing the plurality of parameters to be transmitted with an identifier for generating the transmission signal, the signal length of the transmission signal can be effectively decreased.

In addition, when the signal generation unit 202 reports the identifier to the mobile station 100, the signal generation unit 202 generates a combination of a plurality of parameters, each set value of the parameters, and a signal specifying an identifier representing the combination of the parameters.

The signal specifying the identifier is transmitted to the mobile station 100, so that the identifier detection unit 103 of the mobile station 100 detects the identifier. Then, the identifier conversion table storing unit 104 of the mobile station 100 is referred to using the detected identifier so that corresponding parameters and set values of the parameters are read.

As mentioned before, the contents of the identifier conversion table stored in the identifier conversion table storing unit 104 of the mobile station 100 is the same as the contents of the identifier conversion table stored in the identifier conversion table storing unit 204 of the mobile station 200.

As a result, as mentioned above, each parameter the same as the parameter selected by the signal generation unit 202 of the access network apparatus 200 is read from the identifier conversion table storing unit 104 of the mobile station 100, so that the value is set by the parameter setting unit 105 of the mobile station 100.

Similar to the above-mentioned identifier conversion table storing unit 104 described with reference to Fig.4, the identifier conversion table storing unit 204 stores correspondence relationship between a predefined combination of a plurality of parameters and an identifier indicating the combination of the plurality of parameters. For example, the identifier conversion table storing unit 204 stores at least one identifier for at least one item of service configuration, security configuration, mobile station capability setting, radio channel configuration, measurement item setting and discontinuous reception setting. For example, as described with reference to Fig.4, the identifier conversion table storing unit 204 stores, as a table, a plurality of identifiers, a plurality of parameters belonging to each identifier and set values of each parameter for each setting item.

As mentioned above, the identifier detection unit 203 detects an identifier from the signal received by the data transmit and receive unit 201, and reads at least a parameter indicated by the identifier, and a set value of the parameter from the identifier conversion table storing unit 204.

One parameter may be represented by one identifier or a plurality of parameters may be represented by one identifier. However, the signal length to be transmitted can be decreased more effectively in the case where a plurality of parameters are indicated by one identifier.

The identifier detection unit 203 transmits, to the mobile station via the data transmit and receive unit 201, the correspondence relationship between the combination of the plurality of parameters and the identifier indicating the combination of the plurality of parameters as the system information, for example.

The parameter setting unit 205 performs setting of each parameter value read by the identifier detection unit 203 and performs setting of each parameter value selected by the signal generation unit 202 in the above-mentioned way. Then, the data transmit and receive unit 201 transmits the downlink transmission signal to the mobile station 100 based on the parameter value that is set in this way.

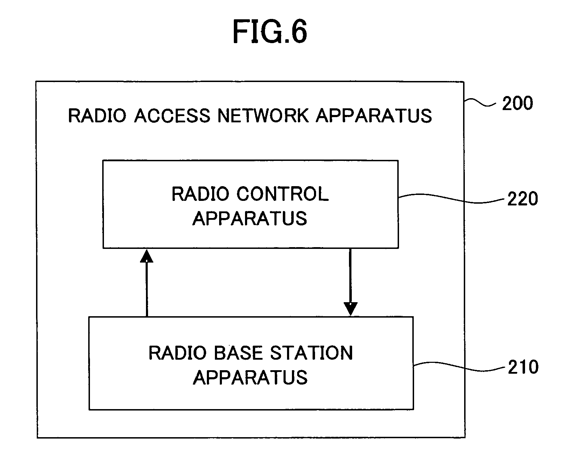

The above-mentioned embodiment is an embodiment in which, as shown in Fig.6, the radio access network apparatus 200 includes the function of the radio control apparatus 220 and the function of the radio base station apparatus 210. In this case, for example, the radio control apparatus 220 is provided with the signal generation unit 202, the identifier detection unit 203, the identifier conversion table storing unit 204 and a part of the parameter setting unit 205, and the radio base station apparatus 210 is provided with a part of the parameter setting unit 205 and the data transmit and receive unit 201.

In addition, the radio access network apparatus 200 may be realized as the radio control apparatus 220 and the radio base station apparatus 210.

According to the present embodiment, by storing the identifier conversion tables (104, 204) as described with reference to Fig.4 in both of the mobile station 100 and the radio access network apparatus 200, a plurality of parameters of the uplink transmission signal transmitted from the mobile station and the downlink transmission signal transmitted from the radio access network apparatus can be specified as an identifier in each procedure necessary for connection setup. Thus, the signal length of the signal sent and received by each means for connection setup can be decreased so that the delay time when performing connection setup can be decreased.

Although a sequence of connection setup is described as an example in the present embodiment, the present invention can be applied to every procedure between the mobile station and the network.

### [Industrial Applicability]

The mobile station, the radio access network apparatus and the mobile communication system of the present invention can be applied to a mobile communication system.

The present application claims priority based on Japanese patent application No.2005-250110, filed in the JPO on August 30, 2005 and the entire contents of the Japanese patent application No.2005-250110 are incorporated herein by reference.

## Claims

1. A mobile station for performing bidirectional communication between the mobile station and a radio access network apparatus, comprising:
storing means configured to store a conversion table between a combination of a plurality of parameters defined beforehand and an identifier representing the combination of the plurality of parameters;
uplink transmission signal generation means configured to generate an uplink transmission signal including the identifier when performing uplink transmission;
transmission means configured to transmit the uplink transmission signal to the radio access network apparatus;
reception means configured to receive a downlink transmission signal transmitted by the radio access network apparatus; and
parameter setting means configured to detect the identifier from the received downlink transmission signal, read and set a parameter based on the identifier.

2. The mobile station as claimed in claim 1, wherein the storing means stores at least one identifier for at least one item of service configuration, security configuration, mobile station capability setting, radio channel configuration, measurement item setting and discontinuous reception setting.

3. The mobile station as claimed in claim 1, the mobile station further comprising:
conversion table generation means configured to generate the conversion table based on a received correspondence relationship between the combination of the plurality of parameters and the identifier representing the combination of the plurality of parameters,
wherein the reception means receives the correspondence relationship between the combination of the plurality of parameters and the identifier representing the combination of the plurality of parameters from the radio access network apparatus.

4. The mobile station as claimed in claim 3, wherein the reception means receives the correspondence relationship between the combination of the plurality of parameters and the identifier representing the combination of the plurality of parameters as system information.

5. A radio access network apparatus for performing bidirectional communication between a mobile station and the radio access network apparatus, comprising:
storing means configured to store a conversion table between a combination of a plurality of parameters defined beforehand and an identifier representing the combination of the plurality of parameters;
reception means configured to receive an uplink transmission signal transmitted by the mobile station;
parameter setting means configured to detect the identifier from the received uplink transmission signal, read and set a parameter based on the identifier; and
transmission means configured to transmit a downlink transmission signal based on the parameter that is set.

6. The radio access network apparatus as claimed in claim 5,
wherein the storing means stores at least one identifier for at least one item of service configuration, security configuration, mobile station capability setting, radio channel configuration, measurement item setting and discontinuous reception setting.

7. The radio access network apparatus as claimed in claim 5,
wherein the transmission means transmits the correspondence relationship between the combination of the plurality of parameters and the identifier representing the combination of the plurality of parameters to the mobile station.

8. The radio access network apparatus as claimed in claim 7, wherein the transmission means transmits the correspondence relationship between the combination of the plurality of parameters and the identifier representing the combination of the plurality of parameters as system information.

9. A mobile communication system for performing bidirectional communication between a mobile station and a radio access network apparatus,
the mobile station comprising:
storing means configured to store a conversion table between a combination of a plurality of parameters defined beforehand and an identifier representing the combination of the plurality of parameters;
uplink transmission signal generation means configured to generate an uplink transmission signal including the identifier when performing uplink transmission;
transmission means configured to transmit the uplink transmission signal to the radio access network apparatus;
reception means configured to receive a downlink transmission signal transmitted by the radio access network apparatus; and
parameter setting means configured to detect the identifier from the received downlink transmission signal, read and set a parameter based on the identifier,
the radio access network apparatus comprising:
storing means configured to store a conversion table between a combination of a plurality of parameters defined beforehand and an identifier representing the combination of the plurality of parameters;
reception means configured to receive an uplink transmission signal transmitted by the mobile station;
parameter setting means configured to detect the identifier from the received uplink transmission signal, read and set a parameter based on the identifier; and
transmission means configured to transmit a downlink transmission signal based on the parameter that is set.
